# EUROPÄISCHE PATENTANMELDUNG

(11) **EP 2 679 927 A2**
(43) Veröffentlichungstag der Anmeldung: **01.01.2014**
(21) Anmeldenummer: 13002929.1
(22) Anmeldetag: 06.06.2013
(51) Int. Cl.: F24H 1/18, F24D 3/08

(54) **Heizungsanlage mit einem thermischen Pufferspeicher**

(30) Priorität: 26.06.2012 DE 102012012700
(71) Anmelder: Diehl AKO Stiftung & Co. KG, 88239 Wangen (DE)
(72) Erfinder: Fuhge, Bruno, DE - 88145 Opfenbach (DE); Maigler, Andreas, DE - 88213 Ravensburg (DE); Stohr, Ralph, DE - 88299 Leutkirch (DE)
(74) Vertreter: Diehl Patentabteilung

(57) **Zusammenfassung**

Eine Heizungsanlage enthält einen thermischen Pufferspeicher (12); wenigstens einen Verbraucher (10); ein Leitungssystem (14, 20), welches wenigstens eine erste Leitung (14) zum Transportieren eines Heizmediums, das eine erste Temperatur aufweist, zwischen einem ersten Anschluss (18) des Pufferspeichers (12) und einem ersten Anschluss (16) des Verbrauchers (10) und wenigstens eine zweite Leitung (20) zum Transportieren des Heizmediums, das eine zweite Temperatur niedriger als die erste Temperatur aufweist, zwischen einem zweiten Anschluss (24) des Pufferspeichers (12) und einem zweiten Anschluss (22) des Verbrauchers (10) aufweist; eine Fördervorrichtung (26) zum Fördern des Heizmediums durch das Leitungssystem (14, 20); und wenigstens eine Ventilvorrichtung (28), die in dem Leitungssystem (14, 20) dem wenigstens einen Verbraucher (10) zugeordnet zum Steuern des Durchströmens des Heizmediums durch den Verbraucher vorgesehen ist. Zur Nutzung überschüssiger Restwärme des wenigstens einen Verbrauchers (10) ist die Fördervorrichtung (26) ausgebildet ist, um das Heizmedium in die eine oder die andere Richtung zwischen dem Pufferspeicher (12) und dem wenigstens einen Verbraucher (10) zu fördern, und ist eine Steuereinrichtung (34) zum Ansteuern der Fördervorrichtung (26) und der wenigstens einen Ventilvorrichtung (28) vorgesehen.

## Beschreibung

Die vorliegende Erfindung betrifft eine Heizungsanlage mit einem thermischen Pufferspeicher und ein Verfahren zum Betreiben einer Heizungsanlage mit einem thermischen Pufferspeicher.

Bei Heizungsanlagen ohne thermischen Pufferspeicher muss eine Heizvorrichtung (z.B. Brennkessel) immer dann betrieben werden, wenn ein oder mehrere Verbraucher (z.B. Heizkörper, Warmwasserspeicher) Wärmeenergie benötigen. Andererseits werden vermehrt Heizvorrichtungen auf Basis regenerativer Energien eingesetzt (z.B. Solaranlagen, Windkraftanlagen), bei deren (Wärme-)Energieerzeugung sich mehr oder weniger starke Schwankungen nicht vermeiden lassen. Es ist deshalb bekannt, Heizungsanlagen mit thermischen Pufferspeichern auszurüsten, die Wärmeschwankungen auf Seiten der Verbraucher und/oder auf Seiten der Heizvorrichtung bis zu einem gewissen Grad ausgleichen können.

Es ist eine Aufgabe der vorliegenden Erfindung, eine verbesserte Heizungsanlage mit einem thermischen Pufferspeicher zu schaffen, welche eine effiziente Nutzung der Energie ermöglicht.

Diese Aufgabe wird gelöst durch eine Heizungsanlage mit den Merkmalen des Anspruchs 1 bzw. ein Verfahren zum Betreiben einer Heizungsanlage mit den Merkmalen des Anspruchs 8. Besonders bevorzugte Ausgestaltungen und Weiterbildungen der Erfindung sind Gegenstand der jeweiligen Unteransprüche.

Die erfindungsgemäße Heizungsanlage weist auf: einen thermischen Pufferspeicher; wenigstens einen Verbraucher; ein Leitungssystem, welches wenigstens eine erste Leitung zum Transportieren eines Heizmediums, das eine erste Temperatur aufweist, zwischen einem ersten Anschluss des Pufferspeichers und einem ersten Anschluss des Verbrauchers und wenigstens eine zweite Leitung zum Transportieren des Heizmediums, das eine zweite Temperatur niedriger als die erste Temperatur aufweist, zwischen einem zweiten Anschluss des Pufferspeichers und einem zweiten Anschluss des Verbrauchers aufweist; eine Fördervorrichtung zum Fördern des Heizmediums durch das Leitungssystem; und wenigstens eine Ventilvorrichtung, die in dem Leitungssystem dem wenigstens einen Verbraucher zugeordnet zum Steuern des Durchströmens des Heizmediums durch den Verbraucher vorgesehen ist. Die Heizungsanlage ist weiter dadurch gekennzeichnet, dass die Fördervorrichtung ausgebildet ist, um das Heizmedium in die eine oder die andere Richtung zwischen dem Pufferspeicher und dem wenigstens einen Verbraucher zu fördern; und dass eine Steuereinrichtung zum Ansteuern der Fördervorrichtung und der wenigstens einen Ventilvorrichtung vorgesehen ist. Optional ist die Steuereinrichtung zum Ansteuern einer Mischbatterie vorgesehen.

Bei der erfindungsgemäßen Heizungsanlage kann die Fördervorrichtung in beide Förderrichtungen betrieben werden, sodass das Heizmedium wahlweise in der einen oder der anderen Richtung durch das Leitungs(kreislauf)system gefördert werden kann. Neben dem normalen Betrieb der Heizungsanlagen, in welchem die Fördervorrichtung das warme Heizmedium aus dem Pufferspeicher in den/die Verbraucher fördert, um diese(n) zu erwärmen, ist auch ein Betriebsmodus möglich, in welchem die Fördervorrichtung das warme Heizmedium aus dem/den Verbraucher(n) zurück in den Pufferspeicher fördert. Auf diese Weise ist es möglich, die in dem/den Verbraucher(n) vorhandene überschüssige Restwärme zu nutzen, indem sie wieder dem Pufferspeicher zugeführt wird. Die Energieeffizienz der Heizungsanlage kann so gesteigert werden. Außerdem ist es auf diese Weise auch möglich, den Verbraucher aktiv zu kühlen.

Fördervorrichtung, Ventilvorrichtung und Steuereinrichtung sind bei der erfindungsgemäßen Heizungsanlage so ausgestaltet, dass die Steuereinrichtung die Förderrichtung der Fördervorrichtung steuern kann und auch die Ventilvorrichtung öffnen und schließen kann, um die oben beschriebenen Betriebsmodi durchzuführen.

Das Leitungssystem der Heizungsanlage muss im Vergleich zu herkömmlichen Heizungsanlagen mit Pufferspeicher nicht modifiziert werden. Die Erfindung kann sowohl in neuen Anlagen sowie in bestehenden Anlagen/Heizungssystemen mit Pufferspeicher verwendet werden.

Das aktive Kühlen eines Verbrauchers nach dessen Nutzung erfolgt bei der erfindungsgemäßen Heizungsanlage nicht über eine Kühlvorrichtung, ein Kühlsystem, einen Kältespeicher oder dergleichen. Stattdessen wird die Restwärme des Verbrauchers dem thermischen Pufferspeicher der Heizungsanlage zurückgeführt, sodass die Wärmeenergie innerhalb des Systems verbleibt und noch genutzt werden kann.

Das Leitungssystem, welches wenigstens eine erste Leitung zwischen dem ersten Anschluss des Pufferspeichers und dem ersten Anschluss eines Verbrauchers sowie wenigstens eine zweite Leitung zwischen dem zweiten Anschluss des Pufferspeichers und dem zweiten Anschluss eines Verbrauchers aufweist, bildet vorzugsweise zusammen mit dem Pufferspeicher und dem/den Verbraucher(n) einen geschlossenen Kreislauf für das Heizmedium. Sind mehrere, d.h. wenigstens zwei Verbraucher vorhanden, so sind die erste Leitung und die zweite Leitung vorzugsweise verzweigt, um alle Verbraucher mit dem einen Pufferspeicher zu verbinden.

Bei dem Heizmedium handelt es sich um ein durch ein Leitungssystem förderbares Medium, welches geeignet ist, Wärme aufzunehmen und Wärme abzugeben, insbesondere mittels Wärmeaustausch. Für die Heizungsanlage der Erfindung wird vorzugsweise ein Fluid, besonders bevorzugt Wasser, als Heizmedium verwendet.

Der Begriff des Verbrauchers bezeichnet in diesem Zusammenhang jede Art von Wärmeenergie benötigendem Verbraucher. Solche Verbraucher können auch als Wärmesenken bezeichnet werden. Zu den Verbrauchern in diesem Sinne, zählen insbesondere Heizkörper, Flächenheizkörper, Fußbodenheizungen, Warmwasserspeicher und dergleichen.

Unter dem Begriff des thermischen Pufferspeichers soll in diesem Zusammenhang jede Art von Vorrichtung verstanden werden, welche geeignet ist, Wärmeenergie zu speichern. Der Pufferspeicher enthält vorzugsweise ein geeignetes Speichermedium, welches die Wärmeenergie speichern und bei Bedarf abgeben kann. Zu den Pufferspeichern in diesem Sinne zählen insbesondere Schichtzonen-Pufferspeicher, Latentwärmespeicher und dergleichen.

Der thermische Pufferspeicher ist vorzugsweise mit einer Heizvorrichtung verbunden, welche das Speichermedium des Pufferspeichers erwärmen kann. Die Heizvorrichtung wird vorzugsweise ebenfalls von der Steuereinrichtung der Heizungsanlage und/oder einem Gebäudemanagementsystem (z.B. Smart Home) angesteuert. Die Heizvorrichtung ist vorzugsweise ausgebildet, um das Speichermedium des Pufferspeichers mittels Wärmeaustausch oder elektrisch, d.h. über von der Heizvorrichtung erzeugter elektrischer Energie, zu erwärmen. Die erfindungsgemäße Heizungsanlage kann grundsätzlich mit beliebigen Heizvorrichtungen betrieben werden. Bei den Heizvorrichtungen kann es sich um zentrale oder dezentrale Heizvorrichtungen handeln. Neben den "klassischen" Heizvorrichtungen mit Brennkesseln zum Verbrennen von Heizöl, Gas, Kohle, Holz, Pellets und dergleichen können insbesondere auch Heizvorrichtungen auf Basis regenerativer Energien wie Solaranlagen, Photovoltaikanlagen, Windkraftanlagen, Wärmepumpen und dergleichen eingesetzt werden. Der thermische Pufferspeicher ist vorzugsweise mit einer oder zwei (optional auch mehr) Heizvorrichtungen gekoppelt.

Bei der Fördervorrichtung handelt es sich in diesem Zusammenhang um eine Vorrichtung, die geeignet ist, das Heizmedium durch das Leitungssystem zu fördern. Vorzugsweise handelt es sich um eine Pumpe, insbesondere um eine Zweirichtungspumpe. Die Fördervorrichtung ist vorzugsweise in der mit dem ersten Anschluss des Pufferspeichers verbundenen gemeinsamen ersten Leitung angeordnet, um das warme Heizmedium zu fördern. Im Rahmen der Erfindung können aber auch mehrere Fördervorrichtungen vorgesehen sein, zum Beispiel in den mit den ersten Anschlüssen der Verbraucher verbundenen ersten Leitungszweigen, oder kann/können die Fördervorrichtung(en) auch in der zweiten Leitung zum Fördern des kalten Heizmediums angeordnet sein. Die Fördervorrichtung ist vorzugsweise ausgestaltet, um das Heizmedium mit einer Strömungsrate oder mit unterschiedlichen Strömungsraten zu fördern. Diese Strömungsrate(n) ist/sind fest vorgegeben oder variabel einstellbar.

Vorzugsweise ist jedem der Verbraucher der Heizungsanlage eine eigene Ventilvorrichtung zugeordnet. Unter dem Begriff der Ventilvorrichtung soll in diesem Zusammenhang jede Art von Vorrichtung verstanden werden, die geeignet ist, einen Strom des Heizmediums durch den jeweiligen Verbraucher zu verhindern oder zu ermöglichen. Vorzugsweise kann die Durchflussmenge des Heizmediums durch den Verbraucher stufenweise oder kontinuierlich eingestellt werden. Vorzugsweise handelt es sich bei den Ventilvorrichtungen um Ventile oder Thermostatventile. Die Ventilvorrichtungen sind vorzugsweise in den mit den ersten Anschlüssen der Verbraucher verbundenen ersten Leitungen angeordnet, um den Zulauf des warmen Heizmediums in den Verbraucher zu steuern. Alternativ oder zusätzlich können die Ventilvorrichtungen auch in den mit den zweiten Anschlüssen der Verbraucher verbundenen zweiten Leitungen angeordnet sein, um den Ablauf des kalten Heizmediums aus dem Verbraucher zu steuern. Die Ventilvorrichtungen sind durch die Steuereinrichtung ansteuerbar, vorzugsweise mittels leitungsgebundener oder drahtloser (z.B. Funk) Signalübertragung. Zudem sind die Ventilvorrichtungen vorzugsweise durch den Nutzer der Heizungsanlage über eine geeignete Eingabevorrichtung (z.B. Thermostatregler, Eingabevorrichtung der Steuereinrichtung, etc.) steuerbar.

In einer bevorzugten Ausgestaltung der Erfindung ist die Steuereinrichtung ausgebildet, um zum Kühlen des wenigstens einen Verbrauchers die diesem zugeordnete Ventilvorrichtung (zumindest teilweise) zu öffnen und die Fördervorrichtung zum Fördern des (warmen) Heizmediums von dem Verbraucher über die erste Leitung zum Pufferspeicher anzusteuern. Das warme Heizmedium im Verbraucher wird so zurück in den Pufferspeicher gefördert, wo diese Wärmeenergie für spätere Nutzungen wieder gespeichert werden kann. Gleichzeitig wird kaltes Heizmedium aus dem Pufferspeicher zum Verbraucher gefördert, sodass der Verbraucher aktiv gekühlt wird. Die Steuereinrichtung ist vorzugsweise so ausgebildet, dass gleichzeitig die Ventilvorrichtungen mehrerer Verbraucher in den oben erläuterten Betriebsmodi angesteuert werden.

In einer bevorzugten Ausgestaltung der Erfindung weist der Pufferspeicher eine Messeinrichtung zum Erfassen einer Speichertemperatur oder eines Speichertemperaturverlaufes auf und/oder weist der wenigstens eine Verbraucher eine Messeinrichtung zum Erfassen einer Temperatur des Heizmediums im Verbraucher und/oder einer Temperatur des Verbrauchers auf. Durch diese Maßnahme(n) kann die Steuereinrichtung die Fördervorrichtung und die Ventilvorrichtung(en) in Abhängigkeit von den aktuellen thermischen Verhältnissen steuern. Ist beispielsweise das Heizmedium im Verbraucher nicht mehr warm genug, um dem Pufferspeicher Wärmeenergie zuzuführen, so stoppt die Steuereinrichtung vorzugsweise den Betriebsmodus der Wärmerückführung, insbesondere durch Ausschalten der Fördervorrichtung und/oder Schließen der jeweiligen Ventilvorrichtung(en).

Das Speichermedium des thermischen Pufferspeichers steht vorzugsweise mit dem Heizmedium in Wärmeaustausch oder wird durch das Heizmedium selbst gebildet.

In einer weiteren bevorzugten Ausgestaltung der Erfindung ist wenigstens ein weiterer Verbraucher vorhanden, welcher im Betrieb Wärme erzeugt und/oder benötigt. Dieser weitere Verbraucher ist über eine weitere Ventilvorrichtung an das Leitungssystem der Heizungsanlage angeschlossen, sodass auch eine überschüssige Wärmeenergie dieses weiteren Verbrauchers in den Pufferspeicher gespeichert werden kann. Bei dem weiteren Verbraucher handelt es sich in diesem Zusammenhang vorzugsweise um ein elektrisches Haushaltsgerät wie zum Beispiel eine Geschirrspülmaschine, eine Waschmaschine, einen Wäschetrockner, einen Backofen und dergleichen.

Bei dem erfindungsgemäßen Verfahren zum Betreiben einer Heizungsanlage mit einem thermischen Pufferspeicher und wenigstens einem Verbraucher wird ein Heizmedium, das eine erste Temperatur aufweist, zwischen einem ersten Anschluss des Pufferspeichers und einem ersten Anschluss des Verbrauchers gefördert und wird das Heizmedium, das eine zweite Temperatur niedriger als die erste Temperatur aufweist, zwischen einem zweiten Anschluss des Pufferspeichers und einem zweiten Anschluss des Verbrauchers gefördert. Dabei wird das Durchströmen des Heizmediums durch den Verbraucher mittels wenigstens einer Ventilvorrichtung gesteuert, die dem wenigstens einen Verbraucher zugeordnet ist. Das Verfahren ist weiter dadurch gekennzeichnet, dass das Heizmedium wahlweise in die eine oder die andere Richtung zwischen dem Pufferspeicher und dem wenigstens einen Verbraucher gefördert wird.

Mit diesem Betriebsverfahren können die gleichen Vorteile erzielt werden wie sie oben in Zusammenhang mit der Heizungsanlage der Erfindung beschrieben worden sind. Die Begriffsdefinitionen und bevorzugten Ausgestaltungen der erfindungsgemäßen Heizungsanlage gelten für das erfindungsgemäße Verfahren entsprechend.

In einer bevorzugten Ausgestaltung der Erfindung wird das Heizmedium zum Kühlen des wenigstens einen Verbrauchers von dem Verbraucher über die erste Leitung zum Pufferspeicher gefördert.

In einer bevorzugten Ausgestaltung der Erfindung erfolgt diese Förderung des Heizmediums zum Kühlen des wenigstens einen Verbrauchers von dem Verbraucher zum Pufferspeicher in Abhängigkeit von einer Speichertemperatur oder eines Speichertemperaturverlaufes des Pufferspeichers und/oder einer Temperatur des Heizmediums im Verbraucher und/oder einer Temperatur des Verbrauchers.

In einer bevorzugten Ausgestaltung der Erfindung wird das Heizmedium im thermischen Pufferspeicher direkt oder über ein Speichermedium geheizt.

In einer weiteren bevorzugten Ausgestaltung der Erfindung ist wenigstens ein weiterer Verbraucher vorhanden, welcher im Betrieb Wärme erzeugt und/oder benötigt. Eine überschüssige Wärmeenergie dieses weiteren Verbrauchers kann über die erste Leitung ebenfalls zum Pufferspeicher gefördert werden.

Gegenstand der Erfindung ist schließlich auch eine Steuereinrichtung, die zum Steuern der erfindungsgemäßen Heizungsanlage bzw. zum Durchführen des erfindungsgemäßen Verfahrens zum Betreiben einer Heizungsanlage ausgebildet ist.

Obige sowie weitere Merkmale und Vorteile der Erfindung werden aus der nachfolgenden Beschreibung eines bevorzugten, nicht-einschränkenden Ausführungsbeispiels unter Bezug auf die beiliegenden Zeichnungen besser verständlich. Darin zeigen:
- Fig. 1: eine schematische Darstellung des Aufbaus einer Heizungsanlage gemäß der vorliegenden Erfindung;
- Fig. 2A: eine schematische Darstellung eines ersten Betriebszustandes der Heizungsanlage von Fig. 1;
- Fig. 2B: eine schematische Darstellung eines zweiten Betriebszustandes der Heizungsanlage von Fig. 1;
- Fig. 2C: eine schematische Darstellung eines dritten Betriebszustandes der Heizungsanlage von Fig. 1; und
- Fig. 2D: eine schematische Darstellung eines vierten Betriebszustandes der Heizungsanlage von Fig. 1.

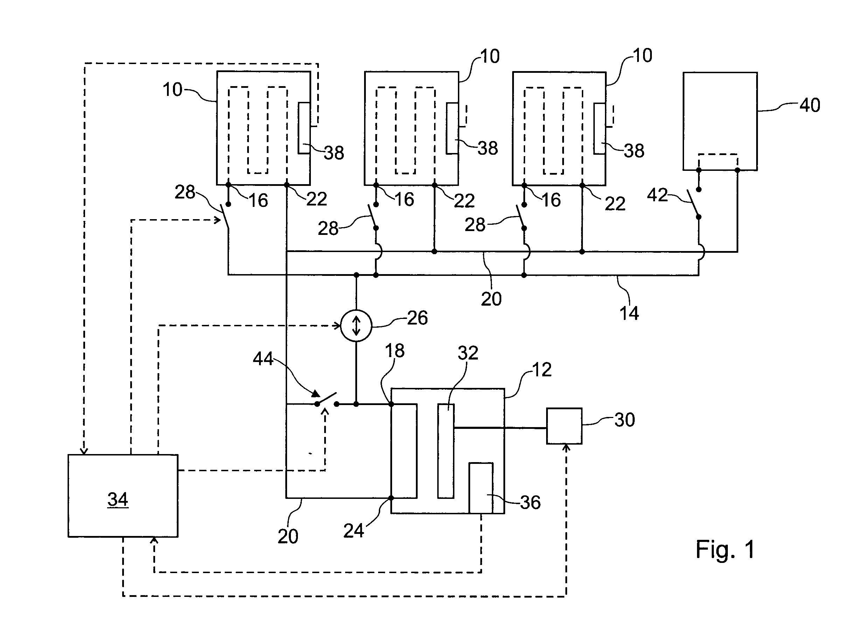

In Figur 1 ist der Aufbau einer Heizungsanlage gemäß der Erfindung am Beispiel eines Gebäudes mit intelligenter Haustechnik veranschaulicht.

In dem Gebäude sind mehrere Verbraucher 10 zum Beispiel in Form von Heizkörpern oder Fußbodenheizschleifen vorhanden. Diese Verbraucher werden von einem thermischen Pufferspeicher 12 zum Beispiel in Form eines Schichtzonen-Pufferspeichers mit Wärme(energie) versorgt.

Zu diesem Zweck sind erste Leitungen 14 vorgesehen, welche jeweils einen ersten Anschluss 16 der Verbraucher 10 mit einem ersten Anschluss 18 des Pufferspeichers 12 verbinden, um ein warmes Heizmedium (vorzugsweise Wasser) zu transportieren. Außerdem sind zweite Leitungen 20 vorgesehen, welche jeweils einen zweiten Anschluss 22 der Verbraucher 10 mit einem zweiten Anschluss 24 des Pufferspeichers 12 verbinden, um das kalte Heizmedium zu transportieren. Die ersten Anschlüsse 16 der Verbraucher 10 können auch als Vorlaufanschlüsse bezeichnet werden, die zweiten Anschlüsse 22 der Verbraucher 10 können auch als Rücklaufanschlüsse bezeichnet werden, wenn man den "normalen" Betriebsmodus des Erwärmens des Verbrauchers beispielsweise zum Heizen eines Raumes betrachtet.

Die ersten Leitungen 14 und die zweiten Leitungen 20 bilden das Leitungssystem der Heizungsanlage. Dabei sind die ersten Leitungen 14 über einen gemeinsamen Leitungsabschnitt mit dem ersten Anschluss 18 des Pufferspeichers 12 verbunden, der zu den Verbrauchern 10 verzweigt, und sind die zweiten Leitungen 20 über einen gemeinsamen Leitungsabschnitt mit dem zweiten Anschluss 24 des Pufferspeichers 12 verbunden, der zu den Verbrauchern 10 verzweigt, um einen geschlossenen Kreislauf für das Heizmedium zu bilden.

In dem gemeinsamen Leitungsabschnitt der ersten Leitungen 14 ist eine Fördervorrichtung 26 vorgesehen. Diese Fördervorrichtung 26 ist in Form einer Zweirichtungspumpe ausgestaltet, sodass sie das warme Heizmedium wahlweise in die eine Richtung vom Pufferspeicher 12 zu den Verbrauchern 10 oder in die andere Richtung von den Verbrauchern 10 zum Pufferspeicher 12 pumpen kann.

Den Verbrauchern 10 ist jeweils eine Ventilvorrichtung 28 zum Beispiel in Form eines Thermostatventils zugeordnet. Diese Ventilvorrichtungen 28 sind in den ersten Leitungen 14 des Leitungssystems vorgesehen und steuern das Durchströmen des Heizmediums durch den jeweiligen Verbraucher 10 (in einer der beiden Richtungen). Die Ventilvorrichtungen 28 können die Strömungsrate des Heizmediums durch den jeweiligen Verbraucher 10 bevorzugt kontinuierlich oder stufenweise steuern, um den Erwärmungsgrad einstellen zu können.

Wie in Fig. 1 angedeutet, ist der Pufferspeicher 12 mit wenigstens einer Heizvorrichtung 30 gekoppelt. Diese Heizvorrichtung 30 ist beispielsweise ein Brennkessel (Heizöl, Gas, Holz, Pellets, etc.), eine Stromversorgung, eine Wärmepumpe, eine Solaranlage, eine Windkraftanlage oder dergleichen. Es können auch zwei solche Heizvorrichtungen 30 mit dem Pufferspeicher 12 verbunden sein. Die Heizvorrichtung 30 heizt das Heizmedium entweder direkt oder über Zwischenschalten eines Speichermediums 32 auf. Der Pufferspeicher 12 ist dabei in der Lage, Schwankungen im Betrieb der Heizvorrichtung 30 auszugleichen und das Leitungssystem der Heizungsanlage stets mit Heizmedium ausreichend hoher Temperatur zu versorgen.

Die Heizungsanlage weist ferner eine vorzugsweise zentrale Steuereinrichtung 34 auf. Diese Steuereinrichtung 34 steuert insbesondere die Ventilvorrichtungen 28 der Verbraucher 10, die Heizvorrichtung(en) 30 sowie die Fördervorrichtung 26 an.

Zur Optimierung der Steuerung der Heizungsanlage weist der Pufferspeicher 12 zudem eine Messeinrichtung 36 auf, welche die Temperatur des Heizmediums bzw. des Speichermediums oder den Temperaturverlauf der Flüssigkeitssäule des Heizmediums bzw. des Speichermediums 32 im Pufferspeicher 12 erfasst und der Steuereinrichtung 34 mitteilt. Außerdem weisen die Verbraucher 10 jeweils eine Messeinrichtung 38 auf, welche die Temperatur des Heizmediums im Verbraucher oder eine Temperatur des Verbrauchers erfassen und der Steuereinrichtung 34 mitteilen.

Die Signalverbindungen zwischen der Steuereinrichtung 34 und den Ventilvorrichtungen 28, der Heizvorrichtung 30, der Messeinrichtung 36, der Mischbatterie 44, der Fördervorrichtung 26, der Ventilvorrichtung 42 und den Messeinrichtungen 38 können leitungsgebunden (z.B. Datenbus) oder drahtlos (z.B. per Funk) ausgestaltet sein. Die Datensignale können wahlweise auch über das Stromnetz übertragen werden.

Wie in Fig. 1 veranschaulicht, sind an das Leitungssystem der Heizungsanlage zudem weitere Verbraucher 40 angeschlossen, welche im Betrieb Wärme erzeugen und/oder benötigen. Jedem dieser weiteren Verbraucher 40 ist eine Ventilvorrichtung 42 zugeordnet, welche in dem ersten Leitungsabschnitt 14 angeordnet ist.

Schließlich ist in dem Leitungssystem der Heizungsanlage auch eine Mischbatterie 44 vorgesehen. Diese Mischbatterie 44 weist eine Bypassleitung auf, welche den gemeinsamen zweiten Leitungsabschnitt 20 unter Umgehung des Pufferspeichers 12 direkt mit dem gemeinsamen ersten Leitungsabschnitt 14 verbindet. In dieser Bypassleitung ist eine Ventilvorrichtung angeordnet, welche von der Steuereinrichtung 34 angesteuert werden kann. Bei geschlossener Ventilvorrichtung strömt das kalte Heizmedium von der zweiten Leitung 20 direkt in die erste Leitung 14, ohne im Pufferspeicher 12 erwärmt zu werden, sodass die Temperatur des Heizmediums in der ersten Leitung 14 gesenkt werden kann.

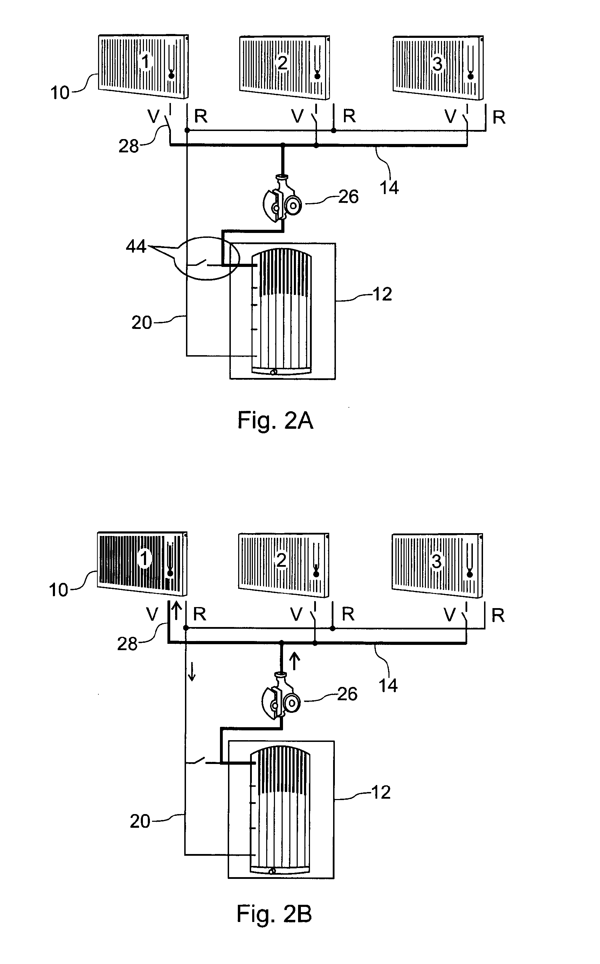

Die Funktionsweise der oben anhand von Fig. 1 erläuterten Heizungsanlage der Erfindung wird nun Bezug nehmend auf Fig. 2A-D, welche verschiedene Betriebszustände dieser Heizungsanlage zeigen, näher beschrieben.

In den Fig. 2A-D sind gleiche Komponenten mit den gleichen Bezugsziffern wie in Fig. 1 gekennzeichnet. Allerdings sind der Einfachheit halber in den Darstellungen der Fig. 2A-D einzelne Komponenten weggelassen.

Fig. 2A zeigt einen Betriebszustand, in welchem keiner der an das Leitungssystem angeschlossenen Heizkörper 10 heizen soll. Die den Heizkörpern 10 zugeordneten Ventilvorrichtungen 28 sind dementsprechend alle geöffnet. Die Zweirichtungspumpe 26 ist ausgeschaltet. Es findet kein Transport des Heizmediums durch das Leitungssystem statt. Das sich im Pufferspeicher 12 befindende Heizmedium kann in dieser Zeit über die Heizvorrichtung 30 erwärmt werden.

Fig. 2B zeigt einen Betriebszustand, in welchem einer der Heizkörper 10 (links in Fig. 2B) erwärmt werden soll, um zum Beispiel einen Raum zu heizen. Selbstverständlich können bei der Heizungsanlage bei Bedarf auch mehrere oder alle Heizkörper 10 gleichzeitig erwärmt werden.

Die Ventilvorrichtung 28 des zu erwärmenden Heizkörpers 10 wird geschlossen. Die Strömungsrate des Heizmediums wird dabei durch den Öffnungsgrad der Ventilvorrichtung 28 entsprechend dem gewünschten Erwärmungsgrad des Heizkörpers 10 eingestellt.

Außerdem wird die Zweirichtungspumpe 26 eingeschaltet. Die Förderrichtung der Zweirichtungspumpe 26 ist dabei so gewählt, dass das warme Heizmedium aus dem Pufferspeicher 12 über die erste Leitung 14 in den zu erwärmenden Verbraucher 10 strömt. Über den geschlossenen Kreislauf strömt das kalte Heizmedium nach dem Wärmeaustausch im Verbraucher 10 über die zweite Leitung 20 zurück zum zweiten Anschluss 24 des Pufferspeichers 12. Die Strömungsrate des Heizmediums ist dabei entweder fest vorgegeben oder kann - je nach Heizbedarf - variabel eingestellt werden.

Dieser Betriebszustand entspricht im Wesentlichen einem normalen Heizbetrieb einer herkömmlichen Heizungsanlage.

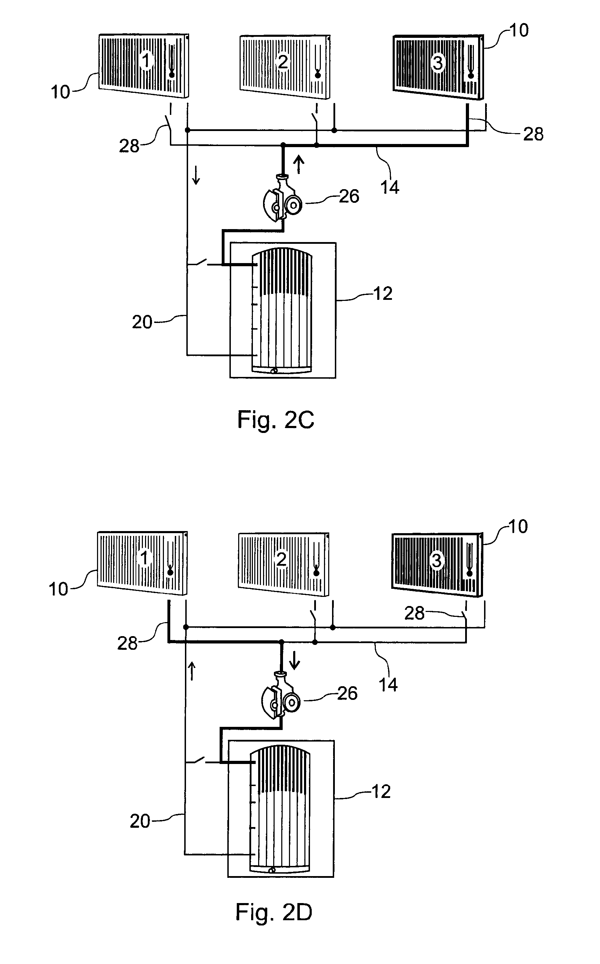

Fig. 2C zeigt nun einen Betriebszustand, bei dem für den ersten Verbraucher 10 (links in Fig. 2C) kein weiterer Heizbedarf mehr besteht, aber stattdessen ein anderer Verbraucher 10 (rechts in Fig. 2C) erwärmt werden soll. Beispielsweise will ein Hausbewohner den Raum wechseln und möchte deshalb den anderen Raum heizen, während der zuvor benutzte Raum nicht mehr geheizt werden muss.

Um den Heizkörper 10 im neuen Raum schnellstmöglich zu erwärmen, wird die diesem zugeordnete Ventilvorrichtung 28 geschlossen, sodass die Pumpe 26 das warme Heizmedium aus dem Pufferspeicher 12 nun in diesen Heizkörper 10 pumpen kann. Da der Heizkörper 10 im ersten Raum nicht mehr erwärmt werden soll, wird gleichzeitig die diesem zugeordnete Ventilvorrichtung 28 geöffnet. Die Pumpe 26 bleibt mit unveränderter Förderrichtung in Betrieb.

Auch dieser Betriebszustand entspricht im Wesentlichen noch einem normalen Heizbetrieb einer herkömmlichen Heizungsanlage.

Nach dem Abschalten des Heizkörpers 10 im ersten Raum (links in den Fig. 2A-D) bleibt dieser Heizkörper 10 noch relativ lange warm und kühlt nur langsam ab. Die Restwärme des Heizkörpers 10, des Heizmediums im Heizkörper, der Raumluft, des warmen Bodens, etc. wird üblicherweise langsam über die Fenster und Wände des Raums nach außen abgegeben. Diese Restwärme bleibt bei herkömmlichen Heizungsanlagen insbesondere ungenutzt.

An dieser Stelle setzt die Erfindung an. Fig. 2C zeigt einen Betriebszustand der Heizungsanlage, bei welchem die Restwärme des ersten Heizkörpers 10 genutzt wird.

Hierzu wird diesem ersten Heizkörper 10 die Wärmeenergie aktiv entzogen und wieder dem Pufferspeicher 12 zugeführt. Aus dem Pufferspeicher 12 kann die rückgeführte Wärmeenergie dann später wieder genutzt werden.

Zu diesem Zwecke steuert die Steuereinrichtung 34 die verschiedenen Komponenten der Heizungsanlage wie folgt an. Die Ventilvorrichtung 28 des dritten Heizkörpers 10, der gerade erwärmt wird / worden ist, wird geöffnet. Die Ventilvorrichtung 28 des ersten Heizkörpers 10, dem die Restwärme entzogen werden soll, wird geschlossen. Die Förderrichtung der Zweirichtungspumpe 26 wird umgekehrt. Als Ergebnis wird das warme Heizmedium aus dem ersten Heizkörper 10 über die erste Leitung 14 dem ersten Anschluss 18 des Pufferspeichers 12 zurückgeführt, und kaltes Heizmedium aus dem zweiten Anschluss 24 des Pufferspeichers 12 wird über die zweite Leitung 20 in den Heizkörper 10 gefördert.

Dieser Betriebszustand wird beibehalten, bis das Heizmedium bzw. das Speichermedium 32 im Pufferspeicher 12 nicht mehr durch das Heizmedium aus dem Heizkörper 10 erwärmt werden kann. Die Heizungsanlage wird dann wieder im Betriebszustand von Fig. 2A oder Fig. 2C betrieben, je nachdem ob ein anderer Heizkörper erwärmt werden soll oder nicht. Falls sich das Heizmedium im ersten Heizkörper 10 anschließend wieder erwärmt, zum Beispiel durch die Restwärme des Heizkörpers 10 selbst oder die Umgebung, so werden die Betriebseinstellungen von Fig. 2D wiederholt.

Um diese Nutzung von nicht benötigter Restwärme eines Heizkörpers 10 möglichst optimal zu gestalten, werden der Steuereinrichtung 34 die Temperaturmesswerte von den Messeinrichtungen 36, 38 des Pufferspeichers 12 und der Heizkörper 10 übermittelt.

Die Restwärme, welche bei herkömmlichen Heizungsanlagen von Gebäuden nach außen entweicht, ist temperaturgetrieben. Je größer die Differenz zwischen der Temperatur des Raums / des Heizkörpers und der Außentemperatur ist, umso höher ist die Verlustleistung. Wird der Raum / der Heizkörper aber in der oben beschriebenen Weise aktiv über die Heizungsanlage gekühlt, so entweicht weniger Wärme aus dem Gebäude nach außen, sondern bleibt innerhalb der Heizungsanlage / des Systems, genauer im Pufferspeicher 12. Die Energieeffizienz der Heizungsanlage kann auf diese Weise deutlich gesteigert werden. Je schneller die Restwärme dem Verbraucher 10 entzogen und in den Pufferspeicher 12 zurückgeführt wird, umso effizienter arbeitet das gesamte System.

Bei einer Differenz von 1 K ist zum Beispiel eine Einsparung von etwa 6% über den Zeitraum, in dem der Raum / der Heizkörper nicht benutzt wird, möglich. Eine so genannte "Nachtabsenkung" beträgt typischerweise etwa 4 K. Dies entspricht dann einer Reduzierung der Wärmeleistung aus dem System um etwa 24%.

Das erfindungsgemäße Verfahren bzw. die erfindungsgemäße Heizungsanlage können auch auf weitere Verbraucher 40 erweitert werden (vgl. Fig. 1).

Nach dem eigentlichen Prozess ist ein elektrisches Haushaltsgerät (z.B. Backofen, Wäschetrockner, Spülmaschine, etc.) noch auf Arbeitstemperatur. Durch Anschließen des Haushaltsgerätes 40 an das Leitungssystem 14, 20 der Heizungsanlage und entsprechendes Schalten der Ventilvorrichtung 28 wie im oben beschriebenen Prozess kann nun auch die Restwärme des Haushaltsgerätes 40 dem Pufferspeicher 12 zugeführt werden.

Um die Effizienz zum Beispiel eines Backvorganges beim nächsten Zyklus nicht zu beeinträchtigen, wird nach dem Abziehen der Restwärme des Backofens das entsprechende Leitungssystem vorzugsweise belüftet. Dies verhindert ein ineffizientes Aufheizen des Heizmediums der Heizungsanlage im Bereich des Backofens während des Backvorganges.

### BEZUGSZIFFERNLISTE

- 10: Verbraucher
- 12: Pufferspeicher
- 14: erste Leitung(en)
- 16: erster Anschluss von 10
- 18: erster Anschluss von 12
- 20: zweite Leitung(en)
- 22: zweiter Anschluss von 10
- 24: zweiter Anschluss von 12
- 26: Fördervorrichtung, Zweirichtungspumpe
- 28: Ventilvorrichtung(en)
- 30: Heizvorrichtung
- 32: Speichermedium
- 34: Steuereinrichtung
- 36: Messeinrichtung von 12
- 38: Messeinrichtung von 10
- 40: weitere(r) Verbraucher
- 42: Ventilvorrichtung(en)
- 44: Mischbatterie

## Patentansprüche

1. Heizungsanlage, mit
einem thermischen Pufferspeicher (12);
wenigstens einem Verbraucher (10);
einem Leitungssystem (14, 20), welches wenigstens eine erste Leitung (14) zum Transportieren eines Heizmediums, das eine erste Temperatur aufweist, zwischen einem ersten Anschluss (18) des Pufferspeichers (12) und einem ersten Anschluss (16) des Verbrauchers (10) und wenigstens eine zweite Leitung (20) zum Transportieren des Heizmediums, das eine zweite Temperatur niedriger als die erste Temperatur aufweist, zwischen einem zweiten Anschluss (24) des Pufferspeichers (12) und einem zweiten Anschluss (22) des Verbrauchers (10) aufweist;
einer Fördervorrichtung (26) zum Fördern des Heizmediums durch das Leitungssystem (14, 20); und
wenigstens einer Ventilvorrichtung (28), die in dem Leitungssystem (14, 20) dem wenigstens einen Verbraucher (10) zugeordnet zum Steuern des Durchströmens des Heizmediums durch den Verbraucher vorgesehen ist,
**dadurch gekennzeichnet, dass**
die Fördervorrichtung (26) ausgebildet ist, um das Heizmedium in die eine oder die andere Richtung zwischen dem Pufferspeicher (12) und dem wenigstens einen Verbraucher (10) zu fördern; und
eine Steuereinrichtung (34) zum Ansteuern der Fördervorrichtung (26) und der wenigstens einen Ventilvorrichtung (28) vorgesehen ist.

2. Heizungsanlage nach Anspruch 1,
**dadurch gekennzeichnet, dass**
die Steuereinrichtung (34) ausgebildet ist, um zum Kühlen des wenigstens einen Verbrauchers (10) die diesem zugeordnete Ventilvorrichtung (28) zu öffnen und die Fördervorrichtung (26) zum Fördern des Heizmediums von dem Verbraucher (10) über die erste Leitung (14) zum Pufferspeicher (12) anzusteuern.

3. Heizungsanlage nach einem der vorhergehenden Ansprüche,
**dadurch gekennzeichnet, dass**
der Pufferspeicher (12) eine Messeinrichtung (36) zum Erfassen einer Speichertemperatur oder eines Speichertemperaturverlaufes aufweist.

4. Heizungsanlage nach einem der vorhergehenden Ansprüche,
**dadurch gekennzeichnet, dass**
der wenigstens eine Verbraucher (10) eine Messeinrichtung (38) zum Erfassen einer Temperatur des Heizmediums im Verbraucher und/oder einer Temperatur des Verbrauchers aufweist.

5. Heizungsanlage nach einem der Ansprüche 1 bis 4,
**dadurch gekennzeichnet, dass**
ein Speichermedium (32) des thermischen Pufferspeichers (12) mit dem Heizmedium in Wärmeaustausch steht.

6. Heizungsanlage nach einem der Ansprüche 1 bis 4,
**dadurch gekennzeichnet, dass**
ein Speichermedium (32) des thermischen Pufferspeichers (12) durch das Heizmedium gebildet wird.

7. Heizungsanlage nach einem der vorhergehenden Ansprüche,
**dadurch gekennzeichnet, dass**
wenigstens ein weiterer Verbraucher (40) vorhanden ist, welcher im Betrieb Wärme erzeugt und/oder benötigt; und
der weitere Verbraucher (40) über eine weitere Ventilvorrichtung (42) an das Leitungssystem (14, 20) der Heizungsanlage angeschlossen ist.

8. Verfahren zum Betreiben einer Heizungsanlage mit einem thermischen Pufferspeicher (12) und wenigstens einem Verbraucher (10), bei welchem ein Heizmedium, das eine erste Temperatur aufweist, zwischen einem ersten Anschluss (18) des Pufferspeichers (12) und einem ersten Anschluss (16) des Verbrauchers (10) gefördert wird und das Heizmedium, das eine zweite Temperatur niedriger als die erste Temperatur aufweist, zwischen einem zweiten Anschluss (24) des Pufferspeichers (12) und einem zweiten Anschluss (22) des Verbrauchers (10) gefördert wird, wobei das Durchströmen des Heizmediums durch den Verbraucher (10) mittels wenigstens einer Ventilvorrichtung (28), die dem wenigstens einen Verbraucher (10) zugeordnet ist, gesteuert wird,
**dadurch gekennzeichnet, dass**
das Heizmedium wahlweise in die eine oder die andere Richtung zwischen dem Pufferspeicher (12) und dem wenigstens einen Verbraucher (10) gefördert wird.

9. Verfahren nach Anspruch 8,
**dadurch gekennzeichnet, dass**
das Heizmedium zum Kühlen des wenigstens einen Verbrauchers (10) von dem Verbraucher (10) über die erste Leitung (14) zum Pufferspeicher (12) gefördert wird.

10. Verfahren nach Anspruch 9,
**dadurch gekennzeichnet, dass**
die Förderung des Heizmediums zum Kühlen des wenigstens einen Verbrauchers (10) von dem Verbraucher (10) zum Pufferspeicher (12) in Abhängigkeit von einer Speichertemperatur oder eines Speichertemperaturverlaufes des Pufferspeichers (12) und/oder einer Temperatur des Heizmediums im Verbraucher und/oder einer Temperatur des Verbrauchers erfolgt.

11. Verfahren nach einem der Ansprüche 8 bis 10,
**dadurch gekennzeichnet, dass**
das Heizmedium im thermischen Pufferspeicher (12) direkt oder über ein Speichermedium (32) geheizt wird.

12. Verfahren nach einem der Ansprüche 8 bis 11,
**dadurch gekennzeichnet, dass**
wenigstens ein weiterer Verbraucher (40) vorhanden ist, welcher im Betrieb Wärme erzeugt und/oder benötigt; und
eine überschüssige Wärme des weiteren Verbrauchers (40) über die erste Leitung (14) zum Pufferspeicher (12) gefördert wird.

13. Steuereinrichtung (34) zum Steuern einer Heizungsanlage gemäß einem der Ansprüche 1 bis 7 und/oder zum Durchführen eines Verfahrens zum Betreiben einer Heizungsanlage gemäß einem der Ansprüche 8 bis 12.
